Europäisches Patentamt

European Patent Office

Office européen des brevets

(11) Numéro de publication : **0 537 446 B1**

(12) **FASCICULE DE BREVET EUROPEEN**

(45) Date de publication du fascicule du brevet :
06.12.95 Bulletin 95/49

(51) Int. Cl.⁶ : **H01L 41/09**

(21) Numéro de dépôt : **92114294.9**

(22) Date de dépôt : **21.08.92**

(54) **Moteur piézo-électrique.**

(30) Priorité : **30.08.91 CH 2553/91**

(43) Date de publication de la demande :
**21.04.93 Bulletin 93/16**

(45) Mention de la délivrance du brevet :
**06.12.95 Bulletin 95/49**

(84) Etats contractants désignés :
**CH DE FR GB IT LI NL**

(56) Documents cités :
**EP-A- 0 424 139
FR-A- 2 579 683
PATENT ABSTRACTS OF JAPAN, vol. 15, no.
365 (E-1111) 13 Septembre 1991 & JP-A-3 143
276
JAPANESE JOURNAL OF APPLIED PHYSICS,
vol. 30, no. 9B, Septembre 1991, TOKYO JP,
pages 2289-2291; TATSUYA UCHIKI et al.:
"Ultrasonic Motor Utilizing Elastic Fin Rotor"**

(73) Titulaire : **ASULAB S.A.
Faubourg du Lac 6
CH-2501 Bienne (CH)**

(72) Inventeur : **Luthier, Roland
Pâqueret 24
CH-1025 St-Sulpice (CH)**
Inventeur : **Kurosawa, Minoru
1-6-11 Susukino,
Midori-ku
JP-225 Yokohama (JP)**

(74) Mandataire : **Thérond, Gérard Raymond et al
I C B
Ingénieurs Conseils en Brevets SA
Rue des Sors 7
CH-2074 Marin (CH)**

## Description

La présente invention concerne un moteur piézo-électrique.

On connaît déjà du document EP 0 325 062 un moteur piézo-électrique du type à ondes progressives comportant une embase formant support, de laquelle s'étend normalement un axe de maintien sur lequel est engagé un stator.

Sous le stator, est disposé un transducteur piézo-électrique constitué, par exemple, par une céramique qui peut être excitée électriquement pour fournir au stator un mouvement vibratoire du type à ondes progressives.

Ce moteur piézo-électrique comporte, par ailleurs, un rotor qui est maintenu en contact axial sur le stator par l'intermédiaire de moyens d'appui. Des moyens de transmission du mouvement vibratoire fournit par le stator sont ménagés sur le rotor, ces moyens de transmission étant constitués par des protubérances en forme de segments de cercle.

Des moteurs de construction équivalente sont décrits dans les documents EP 0 395 298 et JP-A-3 143 276. Toutefois, bien que ces moteurs aient une construction similaire au moteur précédemment décrit, ils fonctionnent sur un mode vibratoire différent dit à ondes stationnaires. Ils comportent de même des moyens de transmission du mouvement formés par des protubérances réalisées en surépaisseur directement sur le stator.

Ces différents moteurs présentent l'avantage de pouvoir fournir un couple important à de faibles vitesses de rotation.

Toutefois, dans les applications telles que la robotique, l'ingénierie bio-médicale, voire encore l'aéronautique, on cherche à miniaturiser ces moteurs à l'extrême, ce qui conduit inévitablement à une diminution substantielle de toutes leurs dimensions. Or, la diminution des rayons entraînent, de façon intrinsèque et obligée, des vitesses de rotation très élevées nécessitant la mise en place de moyens de démultiplication qui augmentent sensiblement la complexité des systèmes comportant ces moteurs et qui élèvent leur coût.

Par ailleurs, il est décrit dans le document US 4 453 103, un moteur piézo-électrique du type à structure coaxiale dans lequel le stator qui est de forme tubulaire enveloppe le rotor qui comporte un transducteur piézo-électrique fournissant son mouvement vibratoire à des organes de poussée formés par des éléments élastiquement déformables en flexion. Les organes de poussée prennent périodiquement appui sur le stator pour imprimer au rotor un mouvement rotatif.

Ce type de moteur présente l'inconvénient essentiel d'être de structure très complexe. De plus, il ne comporte pas de moyens d'ajustement de la liaison mécanique entre le rotor et le stator, ce qui ne permet aucun réglage en fin de ligne de production. Ainsi, la complexité structurelle de ce moteur et l'absence de moyens de réglage sur celui-ci font qu'il doit être usiné à des tolérances extrêmement serrées qui augmentent son prix.

Ainsi, la présente invention a pour but de répondre aux inconvénients susmentionnés en fournissant un moteur piézo-électrique susceptible d'être miniaturisé, qui soit capable de délivrer un couple moteur significatif et qui soit de structure simple pour pouvoir être fabriqué à des coûts peu élevés.

Ainsi, la présente invention a pour objet un moteur piézo-électrique comprenant:

- un support
- un stator solidaire du support,
- des moyens piézo-électriques susceptibles d'être électriquement excités pour impliquer au stator un mouvement vibratoire,
- un rotor monté à rotation par rapport au support, ce rotor étant susceptible de se déplacer dans un plan, dit plan de déplacement, autour d'un axe géométrique de rotation sur lequel est centré le stator,
- des moyens de transmission conformés pour transmettre le mouvement vibratoire du stator au rotor et pour déplacer le rotor en rotation autour de son axe, et
- des moyens d'appui du rotor sur le stator,

caractérisé en ce que les moyens piézo-électriques comprennent un élément piézo-électrique de forme annulaire, centré sur l'axe de rotation du rotor et portant sur chaque face une électrode également annulaire de sorte que, lorsqu'ils sont excités électriquement, ces moyens piézo-électriques fournissent au stator un mouvement vibratoire axisymétrique qui présente des composantes de vitesse essentiellement normales au plan de déplacement du rotor, chaque point du stator présentant une composante de vitesse mulle ou quasi-nulle dans ce plan et parallèle à lui et en ce que les moyens de transmission comprennent des moyens élastiquement déformables, interposés entre le rotor et le stator pour transformer lesdites composantes de vitesse normales du mouvement vibratoire axisymétrique du stator en un mouvement de rotation du rotor.

D'autres caractéristiques et avantages de l'invention apparaîtront à la lecture de la description détaillée qui suit, faite en référence aux dessins annexés qui sont donnés uniquement à titre d'exemple et dans lesquels:

- La figure 1 est une vue en coupe longitudinale d'un moteur piézo-électrique selon l'invention,
- la figure 2 est une vue de face d'une électrode du stator de la figure 1, faite selon la flèche II de la figure 1,

- la figure 3 est une vue faite selon la flèche III de la figure 1, représentant de face et de dessus, selon un premier mode de réalisation, un rotor seul destiné à équiper un moteur selon l'invention,
- la figure 4 est une vue de côté uniquement du rotor et du stator représentés à la figure 1,
- la figure 5 est une vue faite selon la flèche V de la figure 6, représentant de face et de dessous, selon un deuxième mode de réalisation, un rotor seul destiné à équiper un moteur selon l'invention,
- la figure 6 est une vue de côté du rotor de la figure 5, faite selon le flèche VI de la figure 5,
- la figure 7 est une demi-vue en section du stator des figures 1 et 4, représenté en traits plein dans sa position de repos, et en traits mixtes interrompus dans ses deux positions extrêmes de déformation lorsque ce stator est excité en vibration, selon une première variante du mouvement vibratoire selon l'invention,
- les figures 8 et 9 sont des diagrammes représentant les courbes de variation d'amplitude de la déformation du stator en fonction, respectivement, du rayon sur le stator et d'une position angulaire sur celui-ci,
- la figure 10 est une demi-vue en section, similaire à la figure 7, mais représentant une deuxième variante du mouvement vibratoire selon l'invention, et
- les figures 11 et 12 sont respectivement des vues similaires à celles des figures 8 et 9, mais représentant des courbes de variation d'amplitude du stator lorsqu'il est mis en vibration selon la variante du mode vibratoire de la figure 10.

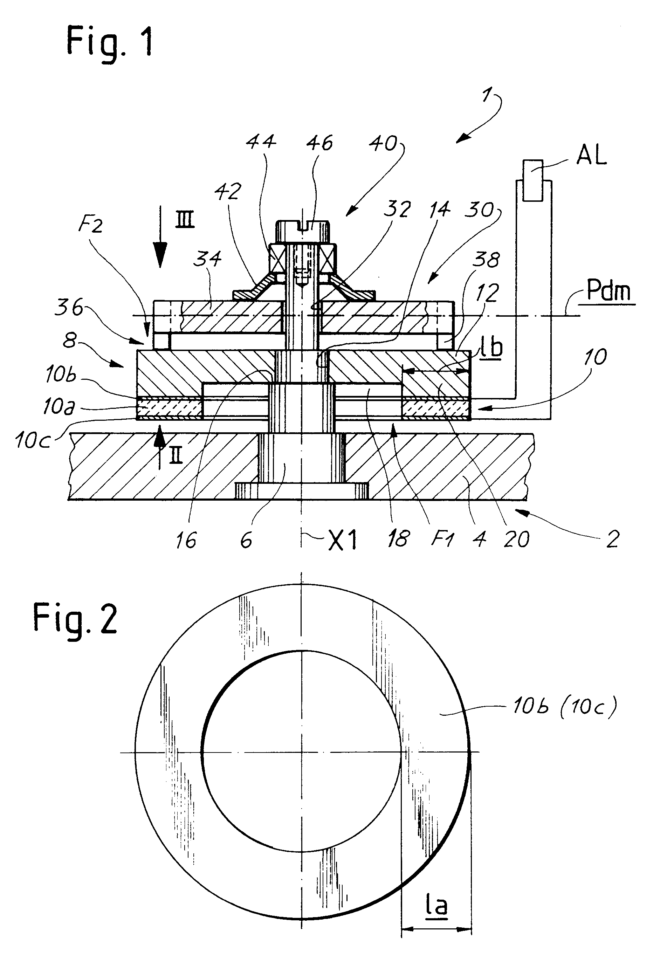

En se référant à la figure 1, on décrira ci-après un mode de réalisation du moteur piézo-électrique selon l'invention, ce moteur étant repéré par la référence générale 1.

Le moteur 1 comporte un support 2 qui est dans cet exemple constitué par une embase 4 dans laquelle est encastré et maintenu fixement, notamment par emmanchement à force du type chassage ou par collage, un axe étagé ou tenon 6. L'axe étagé 6 fait saillie de l'embase 4 en s'étendant verticalement de celle-ci (dans la position de la figure 1) et de façon perpendiculaire à celle-ci.

L'axe étagé 6 qui est de forme extérieure cylindrique matérialise un axe géométrique X1, que l'on appellera ci-après axe géométrique de rotation. L'embase 4 ainsi que l'axe étagé 6 sont réalisés en un matériau métallique, tel que du laiton ou un alliage du type acier inoxydable.

L'ensemble embase 4 - axe 6 constitue donc une structure fixe formant le support 2 du moteur piézo-électrique 1 selon l'invention.

Sur l'axe étagé 6 est monté fixement, de même par emmanchement à force (chassage) ou par collage, un stator 8.

Sur ce stator 8, qui est donc solidaire du support 2 grâce à l'axe étagé 6, sont montés des moyens piézo-électriques 10 constitués d'un élément piézo-électrique 10a, telle qu'une céramique polarisée uniformément selon son épaisseur, et de deux électrodes 10b et 10c qui sont reliées de façon classique à une alimentation électrique AL, représentée ici de façon schématique.

Les moyens piézo-électriques 10 forment donc un transducteur qui, en réponse à une excitation électrique fournie par l'alimentation AL via les électrodes 10b et 10c peut prendre un mouvement vibratoire. Ces phénomènes de piézo-électricité ainsi que la construction et l'agencement de tels transducteurs piézo-électriques dans des moteurs de ce type sont bien connus de l'homme du métier et ne seront donc par conséquent pas décrits ici de façon détaillée.

Dans ce moteur, le stator 8 est constitué par un disque 12 comportant en son centre un orifice débouchant 14 qui, dans cet exemple, est emmanché à force par chassage ou collé directement sur le pourtour extérieur cylindrique de l'axe étagé 6. Le disque 12 qui forme l'ossature du stator 8 repose en appui axial sur un épaulement 16 de l'axe étagé 6.

Comme on le voit particulièrement sur la figure 1, une face F1 du disque 12, disposée en regard de l'embase 4 et dite face arrière, est évidée dans sa partie centrale pour laisser apparaître une creusure borgne ou chambrage 18 débouchant vers l'embase 4.

Cette creusure 18 permet de délimiter, sur la face arrière F1 du disque 12 formant stator, un collet annulaire 20 sur lequel sont montés fixement les moyens piézo-électriques 10.

Les moyens piézo-électriques 10 ont de même une forme de disque annulaire dont la largeur la (figure 2) est égale à celle lb (figure 1) du collet 20.

On remarquera que les électrodes 10b et 10c des moyens piézo-électriques 10 ont de même une forme de disque annulaire de faible épaisseur et présentent en projection frontale, comme on peut le voir sur la figure 2, une structure pleine et entière, c'est-à-dire non découpée et non structurée par des segments polarisés, comme cela est le cas dans les structures classiques.

Les électrodes 10b et 10c qui sont identiques sont donc de conception et de fabrication extrêmement simples.

On précisera ici que le disque 12 formant le stator 8 est de préférence réalisé en un matériau métallique, tel que du laiton, un alliage d'acier inoxydable ou de l'aluminium, éventuellement revêtu d'une couche mince d'un matériau dur, notamment du chrome ou du nitrure de titane. Les électrodes 10b et 10c sont réalisées de préférence en nickel ou en argent.

Le moteur piézo-électrique 1 comporte par ailleurs un rotor 30 monté à rotation par rapport au support 2 autour de l'axe géométrique de rotation X1.

Plus particulièrement, le rotor 30 repose en appui axial sur une face F2 du disque 12, opposée à la face F1, tandis qu'il est engagé librement par un orifice central 32 sur une partie du pourtour extérieur cylindrique de l'axe étagé 6.

Le rotor 30 comporte dans cet exemple de réalisation un disque de faible épaisseur 34 réalisé en un matériau tel que du métal, de la céramique ou du plastique dur. Ce disque 34 forme une structure rigide et porteuse pouvant engrener avec des moyens d'accouplement, non représentés.

Le moteur piézo-électrique 1 comporte de plus des moyens 36 de transmission de mouvement conformés pour transmettre au rotor 30 le mouvement vibratoire du stator 8 et pour déplacer le rotor 30 en rotation autour de son axe X1. On notera que le rotor est donc apte à se déplacer en rotation dans un plan de déplacement moyen Pdm normal à l'axe de rotation X1.

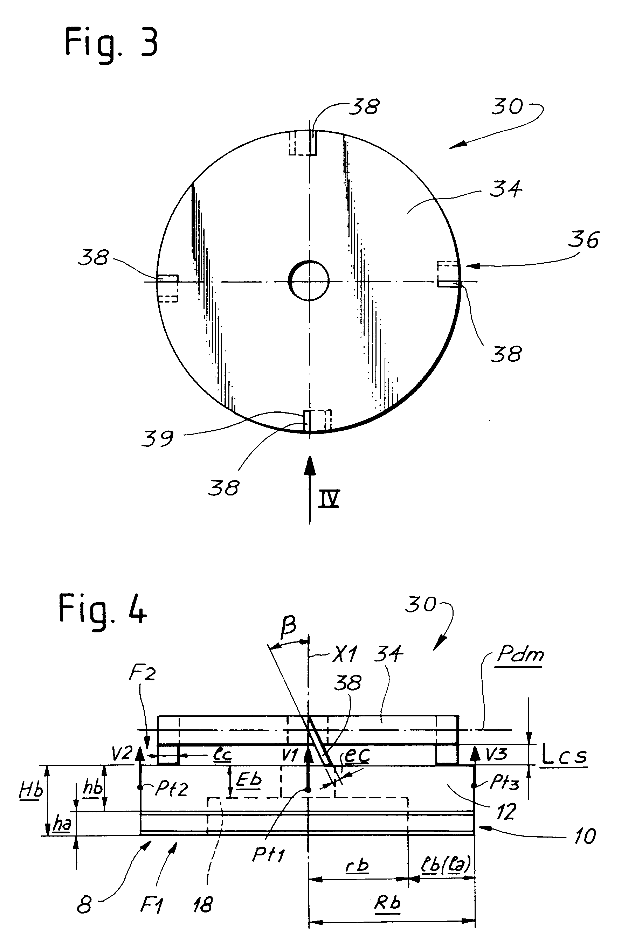

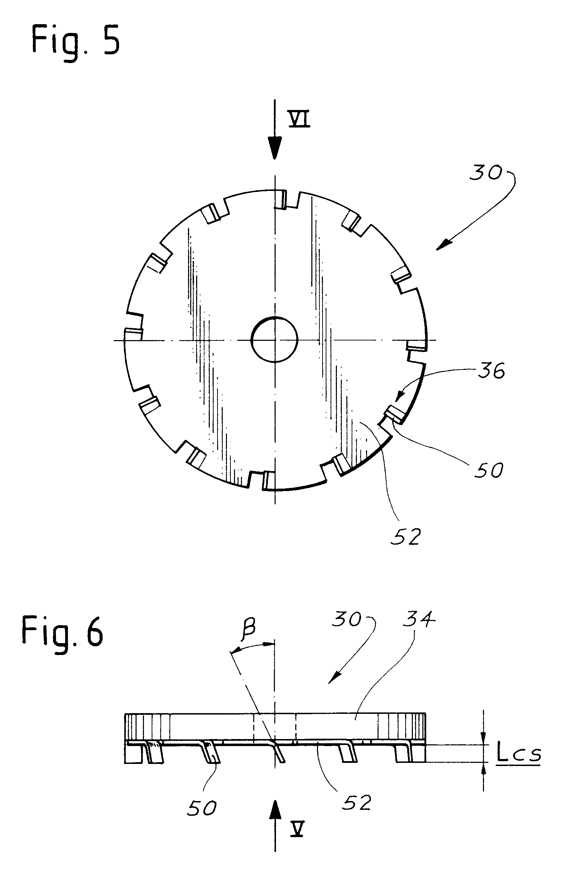

Ces moyens de transmission 36 sont formés par des organes élastiquement déformables (même référence) constitués par des lames de flexion 38. Les lames de flexion 38, comme on le voit mieux sur les figures 3 et 4, sont dans cet exemple encastrées dans le disque 34 formant la structure porteuse du rotor 30. Les organes élastiquement déformables 36 constitués par les lames de flexion 38 sont donc assujettis au rotor.

Les caractéristiques de ces lames de flexion seront décrites par la suite de façon plus détaillée.

Toujours en se référant à la figure 1, on remarquera que le rotor 30 est sollicité en direction axiale vers le stator 8 par l'intermédiaire de moyens d'appui 40. Ces moyens 40 qui permettent l'appui axial du rotor 30 sur le stator 8 sont constitués par un ressort en forme de cuvette 42 monté sur l'axe étagé 6 et maintenu en pression axiale par un roulement 44 qui est lui-même disposé sur l'axe étagé 6 et qui est maintenu sur celui-ci par une vis 46 montée à l'extrémité libre dudit axe 6. Ces moyens d'appui permettent l'ajustement de la pression d'appui du rotor 30 sur le stator 8, par vissage ou dévissage de la vis 46.

En se référant désormais aux figures 3 et 4, on décrira plus particulièrement le rotor 30 selon l'invention, et notamment la disposition sur celui-ci des organes élastiquement déformables ou moyens de transmission 36.

Comme on le voit sur ces figures, les organes élastiques 36 sont constitués par des lames de flexion plates encastrées à la périphérie du disque 34. On a représenté sur ces figures uniquement quatre des ces lames 38, mais on comprendra bien entendu qu'au moins trois lames doivent être disposées sur le rotor 30. Un nombre beaucoup plus important de lames peut être prévu, le nombre limite étant donnée par des conditions d'encombrement maximal. Les lames de flexion 38 sont encastrées et maintenues fixement par collage dans des rainures radiales 39 inclinées, ménagées à la périphérie du disque 34.

Les lames de flexion 38 font donc saillie du rotor 30, et notamment du disque 34, en direction de la face avant F2 du stator 8 selon un angle d'inclinaison $\beta$ ayant pour origine une droite parallèle à l'axe de rotation X1. De préférence, cet angle $\beta$ est compris entre 10 et 30°.

Par ailleurs, chaque lame de flexion 38 qui a une forme plane du type parallélépipédique fait saillie du rotor 30 sur une longueur libre Lcs choisie de préférence dans des valeurs se situant entre 0,3 et 0,7 mm ( 0,3 et $0,7.10^{-3}$ mètres ). De préférence, chaque lame 38 présente une épaisseur ec ayant une valeur entre 0,06 et 0,15 mm (0,06 et $0,15.10^{-3}$ mètres) et une largeur lc ayant une valeur se situant entre 0,2 et 1 mm ( 0,2 et $1.10^{-3}$ mètres). On remarque donc que les lames de flexion 38, qui sont interposées entre le rotor 30 et le stator 8, aboutent et reposent directement sur la face arrière plane F2 du stator 8, la face arrière F2 étant lisse et exempte de tout élément en saillie ou protubérance.

Les lames de flexion 38 sont réalisées en un matériau, tel qu'un alliage du type béryllium-cuivre ou du type acier inoxydable.

Les figures 5 et 6 représentent un deuxième mode de réalisation des organes élastiquement déformables de l'invention.

Dans ce mode de réalisation, les organes élastiquement déformables 36 sont constitués par des lames de flexion recourbées 50 (dont seulement certaines sont référencées) ménagées sur un disque 52 avec lequel ces dernières viennent de matière. On remarquera que le disque 52 est rapporté sous le disque 34 formant le rotor 30.

Dans cet exemple de réalisation, les lames de flexion 50 sont ménagées à la périphérie du disque 52 par une opération de déformation à froid, et notamment par emboutissage. On comprend donc que, dans cet exemple, les lames de flexion 50 formant notamment les moyens de transmission du mouvement vibratoire fourni par le stator au rotor sont obtenues par des opérations susceptibles d'être réalisées à des cadences élevées.

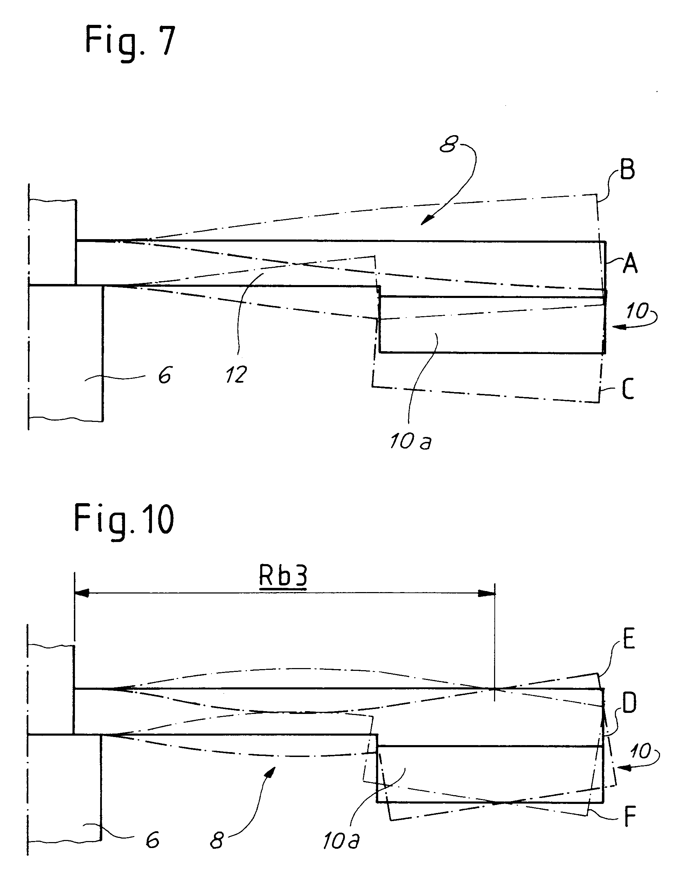

En se référant désormais aux figures 7 à 9, on décrira ci-après une première variante du mouvement vibratoire du stator selon l'invention.

Comme le montre clairement la demi-vue en section du stator 8, représentée à la figure 7, le stator 8 présente une déformation en flexion de part et d'autre de sa position de repos repérée par la référence A. Cette déformation est représentée de façon très exagérée par les positions extrêmes haute et basse B et C, et en réalité elle ne dépasse pas une amplitude de battement supérieure à 5 μm ( $5.10^{-6}$ mètres ), à la périphérie du stator (flèche). Cette déformation donne au stator 8 une forme de cuvette. Cette déformation en cuvette est due à des contraintes de flexion générées dans le stator 8 grâce à son mouvement vibratoire induit par les moyens piézo-électriques 10.

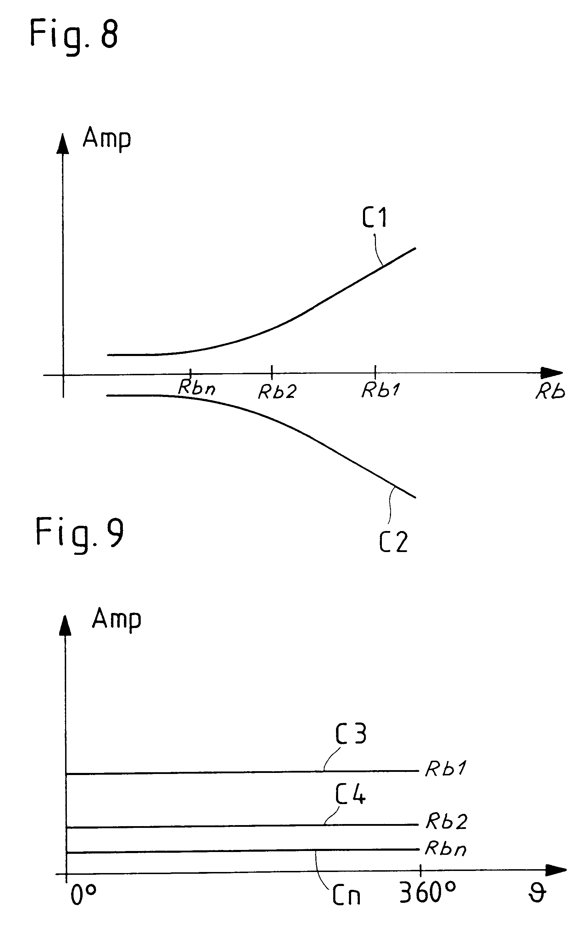

Ce mouvement vibratoire est du type axisymétrique et fournit au stator une déformation du même type. Ceci est corroboré par les courbes C1 et C2 de la figure 8, où l'on remarque que la variation d'amplitude Amp du stator 8 en fonction de son rayon Rb est de même signe, c'est-à-dire croissante, depuis le centre vers la périphérie du stator 8.

On remarque que les courbes C1 et C2 ne présentent aucun point d'inflexion, ni aucun passage par une valeur d'amplitude nulle. Ce mode vibratoire ne fait donc apparaître aucun cercle nodal sur le stator 8. Cette caractéristique est confirmée par les courbes C3 à Cn qui présentent toutes des valeurs d'amplitude différentes de 0 (zéro). Ces courbes C3 à Cn (figure 9) représentent les variations d'amplitude du stator en fonction de positions angulaires sur celui-ci, ces variations étant prises pour une variation d'amplitude positive correspondant à la courbe C1 de la figure 8. De plus, on observe que ces courbes sont droites et toutes parallèles entre elles ce qui démontre que ce mode vibratoire n'induit aucun diamètre nodal. On a donc une vibration selon la norme internationale $B_{nm}$ (n étant le nombre de cercles nodaux et m le nombre de diamètre nodaux ) du type $B_{00}$.

On précisera aussi que ce mouvement vibratoire et cette déformation axisymétriques sont centrés sur l'axe de rotation X1. On a donc fourni un moteur plan étagé, c'est-à-dire ayant un stator et un rotor de forme essentiellement plane et superposés. Ce moteur, grâce au mouvement axisymétrique centré sur l'axe de rotation et orienté selon celui-ci, est du type à mouvement vibratoire essentiellement axial, en référence à l'axe X1.

Grâce à ces modes de vibration et de déformation axisymétriques de très faible amplitude, chaque point par exemple Pt1 à Pt3 (figure 4) du stator 8 effectue tout au moins en projection sur l'axe X1, un déplacement essentiellement linéaire, sur une direction parallèle à l'axe de rotation X1, de même amplitude pour chaque cercle inscrit du rotor au niveau d'un rayon donné (par exemple Rb1 à Rbn) et en phase.

En tout point du stator, et notamment dans la région de contact entre le stator et le rotor, le mode de vibration axisymétrique du moteur piézo-électrique selon l'invention fournit des composantes de vitesse V (seulement trois, V1 à V3, étant représentées sur la figure 4) essentiellement normales au plan de déplacement Pdm du rotor 30. Le stator 8 ne présente donc aucune composante de vitesse significative dans le plan de déplacement Pdm au vu des amplitudes de vibrations extrêmement faibles. Il ne présente donc aucune accélération du type radiale, centrifuge ou centripète qui soit significative. Il est aussi remarquable de noter que ce stator ne présente aucune accélération tangentielle, accélération que l'on retrouve à l'opposé dans les stators des moteurs piézo-électriques classiques ayant un mode vibratoire à ondes progressives ou stationnaires.

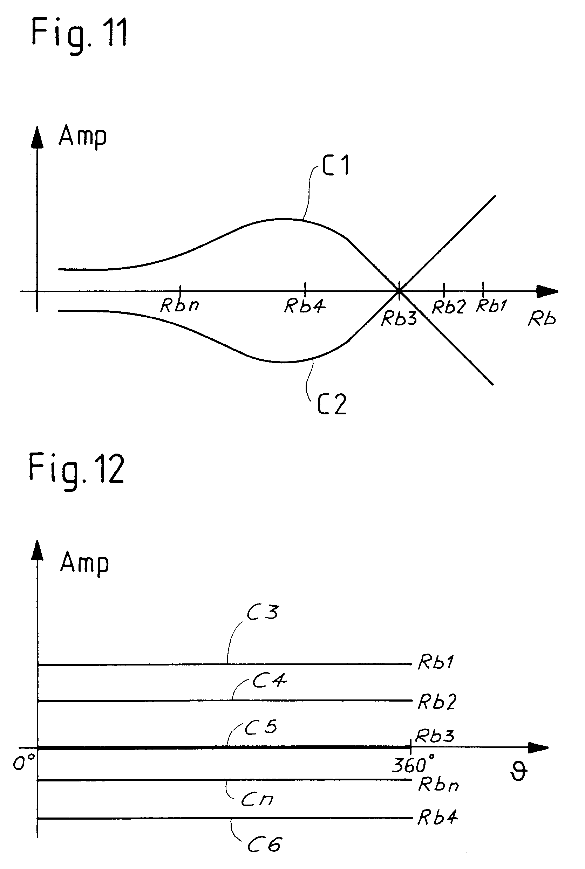

La figure 10 représente la déformation du stator 8 lorsqu'il est soumis à une deuxième variante du mouvement vibratoire axisymétrique selon l'invention, la référence D représentant sa position de repos, tandis que les références E et F représentent l'allure du stator dans ses positions extrêmes de déformation lorsqu'il est excité. Ce mouvement présente cette fois un cercle nodal, repéré notamment au rayon Rb3 (figures 11 et 12). On remarque en effet que les courbes C1 et C2 de la figure 11 passent par une amplitude de valeur nulle marquant un noeud de vibration dans le stator. Les courbes C3 à Cn de la figure 12 illustrent le caractère axisymétrique du mode vibratoire et de la déformation du stator 8 en montrant que pour un rayon donné Rbx du stator, tout cercle inscrit sur celui-ci présente sur 360° d'angle une amplitude (valeur de flèche) constante, les courbes C3 à Cn de la figure 12 étant des droites parallèles entre elles. Ces courbes C3 à Cn représentent les variations d'amplitude du stator en fonction de positions angulaires sur celui-ci, ces variations étant prises pour une variation d'amplitude correspondant à la courbe C2 de la figure 11. Ce mode vibratoire n'induit aucun diamètre nodal sur le stator 8. Ce mode vibratoire est donc du type $B_{10}$.

Pour obtenir ces modes vibratoires axisymétriques du type $B_{00}$ et $B_{10}$, après avoir dimensionné, à titre d'exemple, le stator et les moyens piézo-électriques de la façon suivante (figure 4) ; on a généré au moyen de l'alimentation électrique AL, un courant alternatif de fréquence F, les dimensions et fréquences pour ces modes ayant les valeurs suivantes :

|  | Mode $B_{00}$ en mm $(10^{-3}$ m$)$ | Mode $B_{10}$ en mm $(10^{-3}$ m$)$ |
|---|---|---|
| Hb | 1 | 1 |
| hb | 0.5 | 0.5 |
| Rb | 5 | 5 |
| rb | 3 | 3 |
| lb | 2 | 2 |
| Eb | 0.4 | 0.4 |
| ha | 0.5 | 0.5 |
| la | 2 | 2 |
| | en KHz $(10^3$ hertz$)$ | en KHz $(10^3$ hertz$)$ |
| F | 14 | 84 |

où Hb est la hauteur totale du stator (disque 12 plus moyens piézo-électriques 10) , hb la hauteur du disque 12, c'est-à-dire la hauteur du stator sans les moyens piézo-électriques 10, Rb le grand rayon du stator (pris à la périphérie du disque 12), rb le petit rayon du stator, c'est-à-dire le rayon sur lequel est ménagé la creusure 18, lb la largeur du collet annulaire 20, Eb l'épaisseur du stator (du disque 12) au niveau de la creusure 18, ha la hauteur totale des moyens piézo-électriques 10 (l'épaisseur des électrodes étant ici négligeable), la la largeur des moyens piézo-électriques 10 et F la fréquence de vibration du stator 8, le stator étant bloqué sur l'axe étagé 6 à un rayon de cet axe ayant une valeur de 0,5 mm $(0,5.10^{-3}$ mètres), ce qui est aussi la valeur du rayon de l'orifice 14. Le disque 12 est dans ce cas constitué d'un alliage d'acier inoxydable, alors que l'élément piézo-électrique 10a est constitué d'une céramique piézo-électrique du type PZT (Titane de plomb dopé au Zirconium). Etant donné que deux variantes du mode vibratoire axisymétrique ont été ici décrites ($B_{00}$ et $B_{10}$), on comprendra que le mode vibratoire du moteur selon l'invention peut être généralisé à une notation du type $B_{xo}$; où x peut varier de 0 à un nombre n.

En fonctionnement, les moyens piézo-électriques 10 sont excités par l'alimentation électrique AL, ce qui les fait vibrer. Cette vibration est transmise par contact plan direct au disque 12. Le stator 8 dans son intégralité prend donc un mouvement vibratoire axisymétrique tel qu'on l'a décrit ci-avant, à savoir $B_{00}$ ou $B_{10}$; de manière générale $B_{xo}$.

La déformation en flexion du stator, et donc le déplacement essentiellement linéaire de chaque point élémentaire du stator 8 (notamment en projection sur l'axe de rotation X1) dû à la flèche obtenue sont transformés en un déplacement en rotation concomitant du rotor 30 dans le plan de déplacement Pdm, et ce grâce aux organes élastiquement déformables 36 formés par les lames de flexion 38 ou 50. Ces organes 36, en étant sollicités, fléchissent et induisent dans le rotor 30 des composantes de vitesse tangentielles à la périphérie du rotor, parallèles au plan de déplacement Pdm du rotor 30 et situées dans celui-ci.

Les organes élastiquement déformables 36 formés par les lames de flexion 38 ou 50 forment donc des moyens de transformation de mouvement capables de transmettre, et en même temps de transformer, le mouvement essentiellement axial linéaire (ou normal) du stator, en un mouvement rotatif perpendiculaire du rotor.

On comprend donc de ce qui vient d'être décrit que les contraintes de flexion qui sont générées dans le stator grâce aux moyens piézo-électriques et qui déforment le stator en cuvette sont dues à la structure de bimorphe hétérogène formée par l'assemblage rigide des moyens piézo-électriques 10 sur le stator.

On précisera ici que pour obtenir la déformation du stator recherchée, on utilise une céramique particulière adaptée pour se déformer radialement lorsqu'une excitation électrique spécifique, via les électrodes, lui est appliquée. Plus particulièrement, on a choisit une céramique présentant une constante piézo-électrique $d_{31}$ élevée, cette constante représentant la déformation obtenue par rapport au champ appliqué.

Plus particulièrement, en fonctionnement, la composante radiale de la vibration des moyens piézo-électriques 10 engendre une vibration de flexion du disque 34 par le principe du bimorphe hétérogène, connu de l'homme du métier.

L'alimentation électrique AL délivre un signal alternatif de fréquence F correspondant à la fréquence de résonance du mode $B_{X0}$ désiré.

Le stator dans son intégralité est ainsi excité en résonance dans le mode $B_{X0}$ correspondant à un mouvement vibratoire axisymétrique tel qu'on la décrit ci-avant.

**Revendications**

1.  Moteur piézo-électrique, du type comprenant :
    - un support (2),
    - un stator (8) solidaire du support (2),
    - des moyens piézo-électriques (10) susceptibles d'être électriquement excités pour impliquer au stator (8) un mouvement vibratoire,
    - un rotor (30) monté à rotation par rapport au support (2), ce rotor (30) étant susceptible de se déplacer dans un plan (Pdm), dit plan de déplacement, autour d'un axe géométrique de rotation (X1) sur lequel est centré le stator (8),
    - des moyens de transmission (36) conformés pour transmettre le mouvement vibratoire du stator (8) au rotor (30) et pour déplacer le rotor (30) en rotation autour de son axe (X1), et
    - des moyens d'appui (40) du rotor (30) sur le stator (8),
        caractérisé en ce que les moyens piézo-électriques (10) comprennent un élément piézo-électrique (10a) de forme annulaire, centré sur l'axe de rotation (X1) du rotor et portant sur chaque face une électrode (10b, 10c) également annulaire de sorte que, lorsqu'ils sont excités électriquement, lesdits moyens piézo-électriques (10) fournissent au stator (8) un mouvement vibratoire axisymétrique qui présente des composantes de vitesse (V) essentiellement normales au plan de déplacement (Pdm) du rotor (30), chaque point du stator présentant une composante de vitesse nulle ou quasi-nulle dans ledit plan de déplacement (Pdm) et parallèlement à celui-ci et en ce que lesdits moyens de transmission (36) comprennent des moyens élastiquement déformables (38, 50) interposés entre le rotor (30) et le stator (8) pour transformer lesdites composantes de vitesse normales (V) du mouvement vibratoire axisymétrique du stator (8) en un mouvement de rotation du rotor (30).

2.  Moteur piézo-électrique selon la revendication 1, caractérisé en ce que les moyens élastiquement déformables (38, 50) s'étendent entre le stator (8) et une région périphérique du rotor (30) selon un angle d'inclinaison (β) par rapport à un axe parallèle audit axe de rotation (X1).

3.  Moteur piézo-électrique selon la revendication 2, caractérisé en ce que ledit angle d'inclinaison (β) est compris entre 10° et 30°.

4.  Moteur piézo-électrique selon l'une des revendications 1 à 3, caractérisé en ce que les organes élastiquement déformables (38, 50) sont assujettis au rotor (30).

5.  Moteur piézo-électrique selon l'une des revendications 1 à 4, caractérisé en ce que lesdits organes élastiquement déformables (38, 50) sont constitués par des lames de flexion.

6.  Moteur piézo-électrique selon la revendication 5, caractérisé en ce que lesdites lames (50) sont ménagées sur un disque (52) avec lequel elles viennent de matière, ce disque étant rapporté sur le rotor.

7.  Moteur piézo-électrique selon la revendication 6, caractérisé en ce que lesdites lames (50) sont ménagées sur le disque (52) par une opération de déformation à froid, notamment par emboutissage.

**Patentansprüche**

1.  Piezoelektrischer Motor der Bauart, welche umfaßt:
    - einen Support (2),
    - einen mit dem Support (2) verbundenen Stator (8),
    - piezoelektrische Mittel (10), die elektrisch erregbar sind, um auf den Stator (8) eine Vibrationsbewegung zu übertragen,
    - einen Rotor (30), der drehbeweglich relativ zum Support (2) montiert ist, welcher Rotor (30) in einer Ebene (Pdm) verlagerbar ist, bezeichnet als Verlagerungsebene, um eine geometrische Drehachse (X1), auf die der Stator (8) zentriert ist,

- übertragungsmittel (36), ausgebildet zum Übertragen der Vibrationsbewegung des Stators (8) auf den Rotor (30) und zum Verlagern des Rotors (30) in Drehung um seine Achse (X1), und
- Anpreßmittel (40) des Rotors (30) gegen den Stator (8),

dadurch gekennzeichnet, daß die piezoelektrischen Mittel (10) ein piezoelektrisches Element in Ringform (10a) umfassen, zentriert auf die Drehachse (X1) des Rotors und auf jeder seiner Seiten mit einer ebenfalls ringförmigen Elektrode (10b, 10c) derart versehen, daß, wenn sie elektrisch erregt werden, die piezoelektrischen Mittel (10) auf den Stator (8) eine achssymmetrische Vibrationsbewegung übertragen, welche Geschwindigkeitskomponente (V) aufweist, die im wesentlichen senkrecht zur Verlagerungsebene (Pdm) des Rotors (30) stehen, wobei jeder Punkt des Stators eine Geschwindigkeitskomponente null oder quasi-null in der Verlagerungsebene (Pdm) besitzt und parallel zu jener, und daß die Übertragungsmittel (36) elastisch deformierbare Mittel (38, 50) umfassen, eingefügt zwischen dem Rotor (30) und dem Stator (8), um die senkrechten Geschwindigkeitskomponenten (V) der achssymmetrischen Vibrationsbewegung des Stators (8) in eine Drehbewegung des Rotors (30) umzusetzen.

2. Piezolektrischer Motor nach Anspruch 1, dadurch gekennzeichnet, daß die elastisch deformierbaren Mittel (38, 50) sich zwischen dem Stator (8) und einem peripheren Bereich des Rotors (30) gemäß einem Inklinationswinkel (β) relativ zu einer Achse parallel zur Drehachse (X1) erstrecken.

3. Piezoelektrischer Motor nach Anspruch 2, dadurch gekennzeichnet, daß der Inklinationswinkel (β) zwischen 10° und 30° liegt.

4. Piezoelektrischer Motor nach einem der Ansprüche 1 bis 3, dadurch gekennzeichnet, daß die elastisch deformierbaren Organe (38, 50) an dem Rotor (30) angebracht sind.

5. Piezoelektrischer Motor nach einem der Ansprüche 1 bis 4, dadurch gekennzeichnet, daß die elastisch deformierbaren Organe (38, 50) von Biegelamellen gebildet sind.

6. Piezoelektrischer Motor nach Anspruch 5, dadurch gekennzeichnet, daß die Lamellen (50) auf einer Scheibe (52) ausgearbeitet sind, mit der sie einstückig ausgebildet sind, welche Scheibe an dem Rotor angebracht ist.

7. Piezoelektrischer Motor nach Anspruch 6, dadurch gekennzeichnet, daß die Lamellen (50) auf der Scheibe (52) durch einen Kaltverformungsarbeitsgang hergestellt sind, insbesondere durch Prägen.

## Claims

1. Piezo-electric motor of the type comprising :
   - a support (2),
   - a stator (8) integral with the support (2),
   - piezo-electric means (10) capable of being electrically energized in order to impart vibratory movement to the stator (8),
   - a rotor (30) rotatably mounted with respect to the support (2), this rotor (30) being capable of being displaced in a plane (Pdm), designated the displacement plane, about a geometric axis (X1) on which is centered the stator (8),
   - transmission means (36) being adapted to transmit the vibratory movement of the stator (8) to the rotor (30) and to displace the rotor (30) in rotation about its axis (X1), and
   - means (40) for securing the rotor (30) on the stator (8),

characterized in that the piezo-electric means (10) comprise a piezo-electric element (10a) of annular form, centered on the rotation axis (X1) of the rotor and bearing on each face an electrode (10b, 10c) also annular so that, when they are electrically energized, said piezo-electric means (10) give to the stator (8) an axisymmetric vibratory movement having velocity components (V) substantially normal to the displacement plane (Pdm) of the rotor (30), each stator point having a nul or quasi-nul velocity component in said displacement plane (Pdm) and parallel thereto and in that said transmission means (36) include resiliently deformable members (38, 50) interposed between the rotor (30) and the stator (8) for transforming said normal velocity components (V) of the axisymmetric vibratory movement of the stator (8) into rotary movement of the rotor (30).

2. Piezo-electric motor according to claim 1, characterized in that the resiliently deformable members (38, 50) extend between the stator (8) and a peripheral portion of the rotor (30) at an angle of inclination (β) relative to an axis parallel to said axis of rotation (X1).

3. Piezo-electric motor according to claim 2, characterized in that said angle of inclination (β) is between 10° and 30°.

4. Piezo-electric motor according to one of claims 1 to 3, characterized in that the resiliently deformable members (38, 50) are fixed to the rotor (30).

5. Piezo-electric motor according to one of claims 1 to 4, characterized in that said resiliently deformable members (38, 50) are deflectable tongues.

6. Piezo-electric motor according to claim 5, characterized in that said tongues (50) are disposed on a disc (52) formed of the same material, this disc being mounted on the rotor.

7. Piezo-electric motor according to claim 6, characterized in that said tongues (50) are disposed on the disc (52) by a cold deformation operation, especially by a stamping.

# Fig. 1

# Fig. 2

# Fig. 3

# Fig. 4

11

## Fig. 5

## Fig. 6

## Fig. 7

## Fig. 10

# Fig. 8

# Fig. 9

# Fig. 11

# Fig. 12